# EUROPÄISCHE PATENTSCHRIFT

(11) **EP 1 125 894 B1**
(45) Veröffentlichungstag und Bekanntmachung des Hinweises auf die Patenterteilung: **21.04.2004**
(21) Anmeldenummer: 00890045.8
(22) Anmeldetag: 18.02.2000
(51) Int. Cl.: C02F 1/00, B03B 9/06, B03B 5/28

(54) **Verfahren und Vorrichtung zur Weiterverarbeitung von Biomüll**
Process and apparatus for the further processing of biological waste
Procédé et dispositif pour le traitement ultérieur de déchets biologiques

(43) Veröffentlichungstag der Anmeldung: 22.08.2001
(73) Patentinhaber: Ing. Friedrich Bauer GmbH, 3373 Kemmelbach (AT)
(72) Erfinder: BAUER, Friedrich Ing., 3373 Kemmelbach (AT)

(56) Entgegenhaltungen:
- EP-A- 0 228 724
- EP-A- 0 291 425
- DE-A- 3 836 379
- DE-A- 19 749 530
- US-A- 3 897 215

## Beschreibung

Die Erfindung betrifft ein Verfahren zur Weiterverarbeitung von verunreinigtem, in einem Sammelbereich vorliegenden Biomüll *mit folgenden Verfahrensschritten :*
- *Aufschwemmen des Biomülls in Wasser*
- *Absinkenlassen der spezifisch schweren Verunreinigungen*
- *Abführen der abgesunkenen Verunreinigungen*,
sowie eine Vorrichtung zur Durchführung des Verfahrens.

Üblicherweise liegt Biomüll in stark komprimiertem, halbfeuchtem Zustand vor, der insbesondere bei niedrigeren Außentemperaturen zu Klumpen gefroren ist, wodurch das Auftrennen der Einheiten noch zusätzlich erschwert wird.

Bekannte Verfahren führen das Trennen oder Kompostieren des Biomülls von Hand aus. Händisches Trennen ist aber aufwendig und teuer und erfolgt unter beträchtlich unhygienischen Bedingungen. Darüberhinaus ist das händische Trennen auch noch ineffizient, weil die Steine, Metalle, Glas, Ton, Kunststoffe, Batterieanteile usw umfassenden Verunreinigungen meist nur ungenügend entfernt werden können.

Die in einem überhöhten Ausmaß beibehaltenen Verunreinigungen ruinieren dann die zur Weiterverarbeitung des Biomülls vorgesehenen Mühlen verhältnismäßig rasch.

Demgegenüber führt das Kompostieren der Gesamtmasse wiederum zu Energieverlusten und einer beträchtlichen Umweltbelastung. Darüberhinaus bedeutet es das Verarbeiten von sehr großen Volumina, was wiederum hohe Kosten verursacht und daher auch möglichst zu vermeiden ist.

Aus der DE-A 197 49 530 A1 ist ein Verfahren sowie eine Vorrichtung zur Aufbereitung von Biomüll-Sammelgut, das als ungereinigtes Sammelgut neben biologisch abbaubarer Biomasse auch Schwerterteile wie Sand, Steine, Metall, Glas und Kies sowie Leichtteile wie Folienstücke, Papier und Kunststoffe enthält. Das Sammelgut wird in ein wassergefülltes Becken eingebracht, die schweren Anteile sinken zu Boden und werden im wesentlichen als Schlamm aus dem Aufbereitungsbecken gebracht, Erfindungsgemäß wird ein unterhalb des Wasserspiegels im Aufbereitungsbecken liegender Teil der mit gereinigter Biomasse angereicherten

Wassermenge wird durch Absenken des Wasserspiegels und Absieben des Wassers enfernt. Vor dem Einbringen wird das Sammelgut mechanisch zerkleinert. Das im Wasser befindliche Gut wird mittels Vibratoren und Druckluft im wesentlichen gewaschen. Eine wirkliche Zerkleinerung findet nicht mehr statt. Der vorgestellte Prozeß arbeitet das Sammelgut portions-weise ab.

Weiters ist aus der US- A- 3 897 215 eine Vorrichtung bekannt, deren Ziel die Überführung von öffentlichem Müll in Kompost ist. Das Gut durchläuft erst eine magnetische Trennung und geht anschließlich durch eine Hammermühle, ehe es in einem Becken in Flüssigkeit aufgeschwemmt wird. Aufgabe der Erfindung ist es daher, ein Verfahren zur Weiterverarbeitung von verunreinigtem, in einem Sammelbereich vorliegenden Biomüll zu schaffen, welches die bekannten Nachteile vermeidet. Der anfallende Biomüll soll vollständig, effizient und kostengünstig in Störstoffanteile und biologische Anteile aufgetrennt werden. Hand in Hand damit geht eine gewünschte Volumsverkleinerung des ursprünglichen Mülls. Nach einer solchen Reduktion auf kleine Volumina kann vorteilhafterweise auch eine Behälterkompostierung durchgeführt werden.

Die Erfindung löst die Aufgabe dadurch, daß der Biomüll im Sammelbereich vor seiner Entnahme *aufgelockert* und flächig *verteilt* wird, daß der aufgeschwemmte Biomüll *nach folgenden, einander ergänzenden und kontinuierlichen Verfahrensschritten zerkleinert wird :*
- *mechanisches Aufreißen kompakter Anteile an Biomüll*
- *periodisches Untertauchen und*
- *Weitertransport des Biomülls*
*über eine zwischen Eintritts- und Austrittsbereich definierte Bearbeitungsstrecke im Wasser,* wobei die gegenüber Wasser spezifisch schwereren Verunreinigungen absinken, *und* daß der verbleibende Restmüll aus dem Wasser entfernt, in einem Mahlwerk (22) zerkleinert und das Mahlgut in einen kompostierbaren und in einen fermentierbaren Anteil aufgetrennt wird.

Nach einem weiteren Merkmal der Erfindung ist vorgesehen, daß der dem Sammelbereich entnommenen Biomülls während der Entnahme aufgelockert und flächig verteilt wird. Der Biomüll wird aus dem Sammelbereich mittels einer Fördereinrichtung einer Wasserwanne zugeführt. Idealerweise handelt es sich dabei um ein Förderband. Der verunreinigte Biomüll wird auf diesem nach einer anderen Ausbildung der Erfindung mechanisch zerteilt, vorzugsweise durch Rütteln oder, Rechen.

Der verunreinigte Biomüll wird anschließend, wie oben ausgeführt, in Wasser aufgeschwemmt und zerteilt.

Mittels mechanischer Einrichtungen wird der kompakte Biomüll nach dem Aufschwemmen weiter gelockert und zerfällt in kleinere Bereiche. Insbesondere ist es wichtig, daß der auch schon zerkleinerte Biomüll immer wieder unter Wasser getaucht, gleichzeitig aber auch weitertransportiert wird, um das Zuführen von neuem Biomüll nicht zu behindern.

Während dieser Phasen, in welchen der Biomüll periodisch untergetaucht und weiter transportiert wird, lösen sich Verunreinigungen. Die gegenüber Wasser schwereren Verunreinigungen, wie Steine, Metalle usw. sinken zu Boden, die gegenüber Wasser spezifisch leichteren Verunreinigungen schwimmen auf und werden zusammen mit dem Biomüll weiter transportiert.

Die abgeschiedenen Verunreinigungen werden in Bereiche von im wesentlichen unterschiedlichem spezifischem Gewicht zusammengefaßt und die derart zusammengefaßten Verunreinigungen voneinander getrennt abgeführt.

Ein weiteres Merkmal der Erfindung ist es auch, daß die spezifisch schwereren Verunreinigungen über die Bearbeitungsstrecke des Biomülls im Wasser in mehreren aufeinanderfolgenden Sammelbereichen gesammelt und aus diesen in zeitlich getrennten Phasen abgeführt werden.

Das Abführen der Verunreinigungen erfolgt also nicht augenblicklich nach deren Absinken. Vielmehr werden die Verunreinigungen in Sammelbereichen gesammelt und anschließend periodisch abgeführt.

Im Restmüll gegebenenfalls vorhandene, gegenüber Wasser spezifisch leichtere Verunreinigungen werden aus diesem vor dem Zerkleinern im Mahlwerk entfernt.

Je nach Art der Weiterverarbeitung des Biomülls erfolgt somit eine weitere Selektion. Insbesondere dann, wenn verbliebene Verunreinigungen aus Kunststoff welche aufschwimmen und somit zusammen mit dem Restmüll ausgetragen werden, zur Weiterverarbeitung nicht geeignet sind, werden diese Kunststoffanteile vor dem Transport zum Mahlwerk entfernt.

Nach einem Merkmal der Erfindung ist dabei vorgesehen, daß die im Restmüll verbleibenden und gegenüber Wasser spezifisch leichteren Verunreinigungen über einen Flüssigkeitsstrom entweder aus dem Wasser geführt und entgegen der Stromrichtung entnommen, gesammelt und abgeführt werden und/oder mit dem Flüssigkeitsstrom einem Mahlwerk zugeführt werden.

Sofern diese Verunreinigungen bei der Weiterverarbeitung nicht stören, ist vorgesehen, daß die gegenüber Wasser spezifisch leichteren Verunreinigungen in einem Mahlwerk zerkleinert werden.

Das im Mahlwerk zerkleinerte Mahlgut wird verpreßt und das Preßgut anschließendentsprechend einem Merkmal der Erfindung in einen kompostierbaren und in einen fermentierbaren Anteil aufgetrennt.

Sämtliches die Presse verlassendes Material, insbesondere alle langfaserigen_Anteile wie Holz, Plastik usw. gehören zum kompostierbaren Anteil. Alle durch das Sieb der Presse austretenden Materialien, bspw. Salat usw. bilden den fermentierbaren Anteil und werden ihrer weiteren Verwendung zugeführt.

Durch den ständigen Abbau von Verunreinigungen und das kontinuierliche Auftrennen des Biomülls wird das Wasser ständig mit Schwebestoffen angereichert. Bei einem Zuviel an Verunreinigungen im Wasser wird das Verfahren behindert und kann nicht mehr zufriedenstellend durchgeführt werden. Sollte die spezifische Dichte des Wassers zu hoch werden, kann der entsprechende Störstoffanteil nicht mehr absinken.

Es ist daher nach einem anderen wesentlichen Merkmal der Erfindung vorgesehen, daß das Wasser auf konstanter spezifischer Dichte gehalten wird. Nur dadurch wird ein vollständiges Auftrennen des verunreinigten Biomülls gewährleistet. Dazu wird das verunreinigte Wasser ständig mit Nutzwasser verdünnt.

Durch die Auftrennung des Biomülls gelangen auch Fette in das Wasser. Da das Verfahren im allgemeinen in einem im Freien aufgestellten Wasserbecken durchgeführt wird, muß darauf geachtet werden, daß insbesondere bei niedrigen Temperaturen diese Fette aufgelöst werden.

Nach einem Merkmal der Erfindung ist daher vorgesehen, daß die Wassertemperatur über Schmelztemperatur von im Biomüll beinhalteten Fetten gehalten wird, zur Vermeidung der Ausfällung und Anlagerung der Fette.

Die Wassertemperatur darf also nie so niedrig werden, daß die Fette beginnen, sich im Wandbereich des Wasserbeckens abzulagern. Insbesondere würden sie sich beim Absinken der Störstoffanteile nach dem Austrittsbereich des Wasserbeckens zu ablagern und deren Abtransport unmöglich machen.

Es ist weiters auch noch vorgesehen, daß die Entnahme und der Weitertransport des Restmülls durch exzentrisch bewegte Fördermittel erfolgt.

Die Erfindung betrifft auch eine Vorrichtung zur Durchführung des Verfahrens, mit einem zur Aufnahme des Biomülls vorgesehenen Sammelbereich einer Wasserwanne zum Aufschwemmen des Biomülls, Abscheidevorrichtungen für aus dem Biomüll gelösten Verunreinigungen.

Im allgemeinen wird der Müll mittels LKW angeliefert und in eine Auffangwanne gekippt, aus welcher er zur Weiterverarbeitung transportiert wird.

Die Vorrichtung zur Durchführung des Verfahrens löst die ihr gestellte Aufgabe dadurch, daß die Vorrichtung umfaßt :
- einen mit einer Auffangwanne mit einer Verteileinrichtung zum Transportieren, Auflockern und flächigen Aufbereiten des Biomülls ausgebildeten Sammelbereich
- eine in der Wasserwanne angeordnete Vorrichtung zum Zertrennen sowie zum periodischen Untertauchen und kontinuierlichen Transportieren des Biomülls.
- am Boden der Wasserwanne über die Transportstrecke des Biomülls vorgesehene Sammel- und Austragrinnen zum Sammeln und Abführen der abgesunkenen Verunreinigungen.
- eine Abscheidevorrichtung im Austrittsbereich der Wasserwanne für die aus der Wasserwanne austretenden Verunreinigungen und
- Einrichtungen zum Kompostieren und Fermentieren des Biomülls.

Die im Sammelbereich vorgesehene Verteileinrichtung für den Biomüll umfaßt erfindungsgemäß eine Fördereinrichtung zum Weitertransport des in die Sammelwanne gekippten Biomülls sowie Werkzeuge zur Lockerung und Dosierung des Biomülls. Als Werkzeuge zur Lockerung und Dosierung kommen nach Ausbildungen der Erfindung ein Rechen oder ein Schneckentrieb, vorzugsweise ein rechts-links-gängiger Schneckentrieb zur Anwendung.

Der zusammengeklumpte Biomüll wird durch die Fördereinrichtung, welche als Kratzer, Förderband oder auch Schubstangenförderer ausgebildet sein können, den Werkzeugen zugeführt, welche ihn aufreißen und insbesondere flächig verteilen Weiters ist nach einer Ausführung der Erfindung für den Transport des Biomülls aus der Auffangwanne in die Wasserwanne ein im Anschluß an die Werkzeuge angeordneter Schrägförderer vorgesehen. Dieser kommt insbesondere bei Anlagen zum Einsatz, welche von LKW's beschickt werden.

Der in die Wasserwanne transportierte Biomüll wird in dieser aufgeschwemmt und von einer über die gesamte Länge der Wasserwanne angeordneten Vorrichtung zum Zertrennen zertrennt.

Erfindungsgemäß ist vorgesehen, daß die Vorrichtung zum Zertrennen sowie zum periodischen Untertauchen und kontinuierlichen Transportieren des Biomülls von einem Exzenterantrieb bewegte Trennwerkzeuge umfaßt.

Insbesondere sind nach einer Weiterbildung der Erfindung die Trennwerkzeuge Gabeln, Rechen, Haspeln oder Krallen.

Zweck dieser Trennwerkzeuge ist es, den aufgeschwemmten Müll in kleinere Pakete aufzureißen, um ein Absinken der Verunreinigungen zu ermöglichen. Dazu müssen die Trennwerkzeuge den Biomüll nicht nur durchstechen, sondern ihn auch insbesondere immer wieder untertauchen und weitertransportieren, um einerseits ein vollständiges Auftrennen und Abtransportieren des Restmülls zu gestatten und anderseits ein weiteres Zuführen von verunreinigtem Biomüll in die Wasserwanne nicht zu behindern.

Das kontinuierliche Untertauchen und Weitertransportieren wird durch die exzentrisch bewegten Trennwerkzeuge ideal bewerkstelligt.

Erfindungsgemäß sind die Trennwerkzeuge in dichtem Raster gesetzt, um ein möglichst effizientes Arbeiten zu ermöglichen und einen großen Durchsatz an Biomüll zu erzielen.

Die gegenüber Wasser spezifisch schwereren Verunreinigungen sinken ab und sammeln sich in den am Boden der Wasserwanne angeordneten Sammel- und Austragsrinnen. Vorzugsweise umfaßt die Wasserwanne wenigstens eine Sammel- und Austragsrinne in ihrem Anfangsund in ihrem Endbereich.

Jede der Sammel- und Austragsrinne ist erfindungsgemäß mit einer Vorrichtung zum Ausbringen des angesammelten Materials versehen.

Dabei kann nach Weiterbildungen der Erfindung diese Vorrichtung ein in der Rinne bewegbarer Kratzer oder auch ein Schneckentrieb sein.

Diese Vorrichtung transportiert das Material aus den Sammel- und Austragsrinnen in Sammelbehälter, welche nach Abstellen der Anlage entleert werden.

Um die Wasserwanne und damit das in ihr befindliche Wasser auf stets konstanter Temperatur zu halten, ist nach einer Weiterbildung der Erfindung vorgesehen, daß die Wasserwanne mit einem Doppelmantel ausgebildet ist. In diesem Bereich kann Wasser von vorwählbarer Temperatur vorgesehen sein. Die Wassertemperatur liegt in Abhängigkeit von der Außentemperatur.

Um das Wasser auf die entsprechende Temperatur zu bringen, ist erfindungsgemäß vorgesehen, daß im Mantel der Wasserwanne, insbesondere in derem Bodenbereich eine Heizung angeordnet ist.

Diese Heizung kann nach einem anderen Merkmal der Erfindung auch durch im Doppelmantel geführte Heizrohre realisiert sein.

Nach dem Zertrennen und Weitertransportieren des Biomülls wird dieser im Endbereich der Wasserwanne aus dieser entfernt. Dazu ist eine außerhalb der Wasserwanne angeordnete Abscheidevorrichtung vorgesehen.

Erfindungsgemäß ist die Abscheidevorrichtung eine über dem Niveau der Wasserwanne angeordnete, exzentrisch laufende Walze mit einer Vielzahl aufgesetzter, nach außen weisender blatt- oder stabförmiger Elemente zur Aufnahme des Biomülls.

Diese hintereinander angeordneten blatt- oder stabförmigen Elemente greifen in den aus der Wasserwanne austretenden Flüssigkeitsstrom ein und entfernen den gegenüber Wasser spezifisch leichteren Anteil an Verunreinigung, die bislang noch nicht abgeführt werden konnte.

Nach einer weiteren Ausbildung der Erfindung ist auch vorgesehen, daß die blatt- oder stabförmigen Elemente in Rotationsrichtung der Walze gebogen sind. Vorteilhafterweise sind sie erfindungsgemäß mit federnden Enden oder ganz aus Federstahl ausgebildet. Darüberhinaus sind die blatt- oder stabförmigen Elemente erfindungsgemäß in ihren Endbereichen verjüngt ausgebildet. Idealerweise sind sie nach einer Ausbildung der Erfindung Gabeln.

Um das aus dem Flüssigkeitsstrom entnommene Material weitertransportieren zu können, muß es durch die blatt- oder stabförmigen Elemente abgelegt werden können.

Dazu ist erfindungsgemäß vorgesehen, daß im Austragsbereich der mit elastischen Auslegern versehenen Walze eine Abstreif- und Ablagefläche für das entnommene Material angeordnet ist.

Damit das Material auch abgestreift werden kann, sind erfindungsgemäß die Abstreif- und Ablagefläche mit wenigstens einer schlitzförmigen Ausnehmung zur Durchführung der blattoder stabförmigen Elemente versehen.

Die mit federnden Enden oder aus Federstahl gefertigten Elemente überragen erfindungsgemäß die entsprechende Ausnehmung an Länge. Bei der Ablage des Restmülls verformen sie sich ein wenig und schlüpfen dabei nach erfolgter Ablage durch die Ausnehmungen. Der Restmüll verbleibt auf der Abstreif- und Ablagefläche.

Der Restmüll in ein Mahlwerk verbracht.

Idealerweise sind über die Länge der Walze mehrere Reihen von über deren Umfang hintereinander angeordneten blatt- oder stabförmigen Elementen nebeneinander gesetzt vorgesehen. Jede Reihe korreliert mit einer ihr zugeordneten schlitzförmigen Ausnehmung.

Die Erfindung wird nun an Hand eines Ausführungsbeispieles unter Zuhilfenahme der angeschlossenen Zeichnung näher beschrieben.

Es zeigen :
Fig. 1 eine schematische Darstellung der erfindungsgemäßen Vorrichtung,
Fig.2 eine schematische Darstellung der erfindungsgemäßen Vorrichtung in einer anderen Ausführungsform,
Fig.3A einen Längsschnitt durch die in der Wasserwanne angeordnete Zertrenneinrichtung für den Biomüll,
Fig.3B eine Draufsicht auf die Einrichtung gemäß Fig.3A,
Fig.4A eine Ausführungsform einer Sammel- und Austragsrinne im Schnitt,
Fig.4B eine andere Ausführungsform einer Sammel- und Austragsrinne im Schnitt,

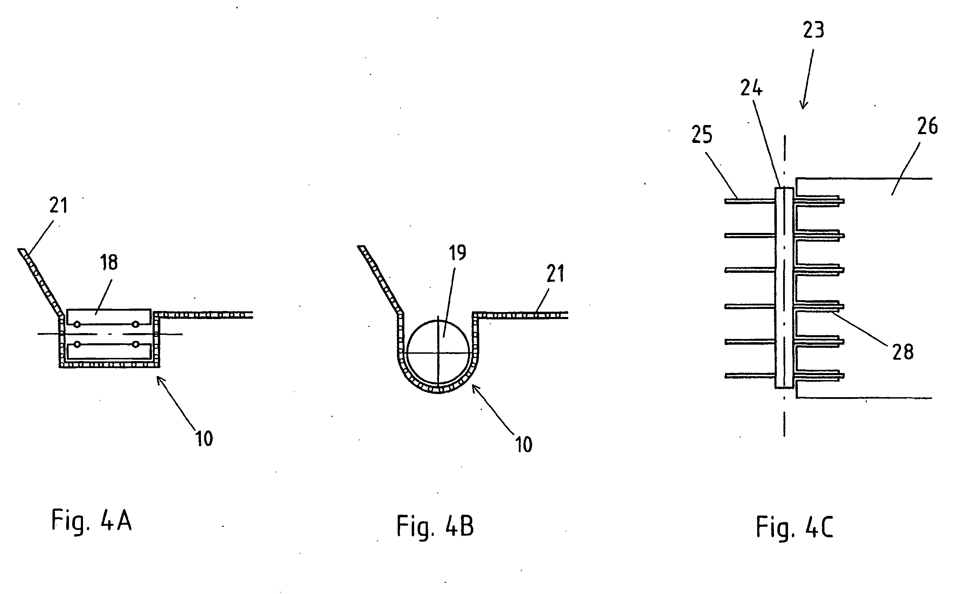

Fig.4.C eine Draufsicht auf eine Ausführungsform der Abscheidevorrichtung und

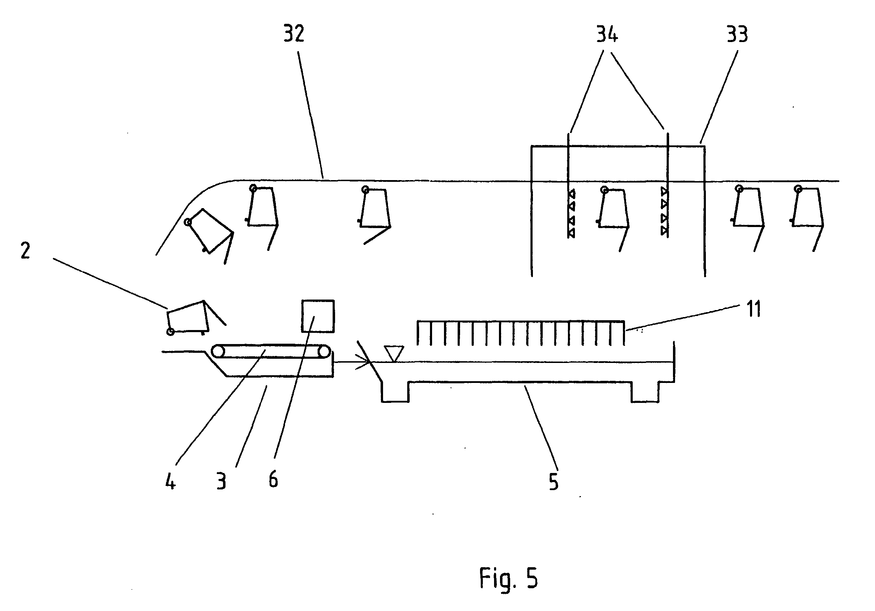

Fig.5 die schematische Darstellung einer Containerwaschanlage nach dem Stand der Technik.

Der zu verarbeitende, verunreinigte Biomüll wird im allgemeinen mittels LKW 1 oder auch in kleineren Containern 2 angeliefert und in eine Auffangwanne 3 gekippt. In dieser wird der Biomüll gesammelt und zur Weiterverarbeitung mittels geeigneter Fördereinrichtungen entnommen.

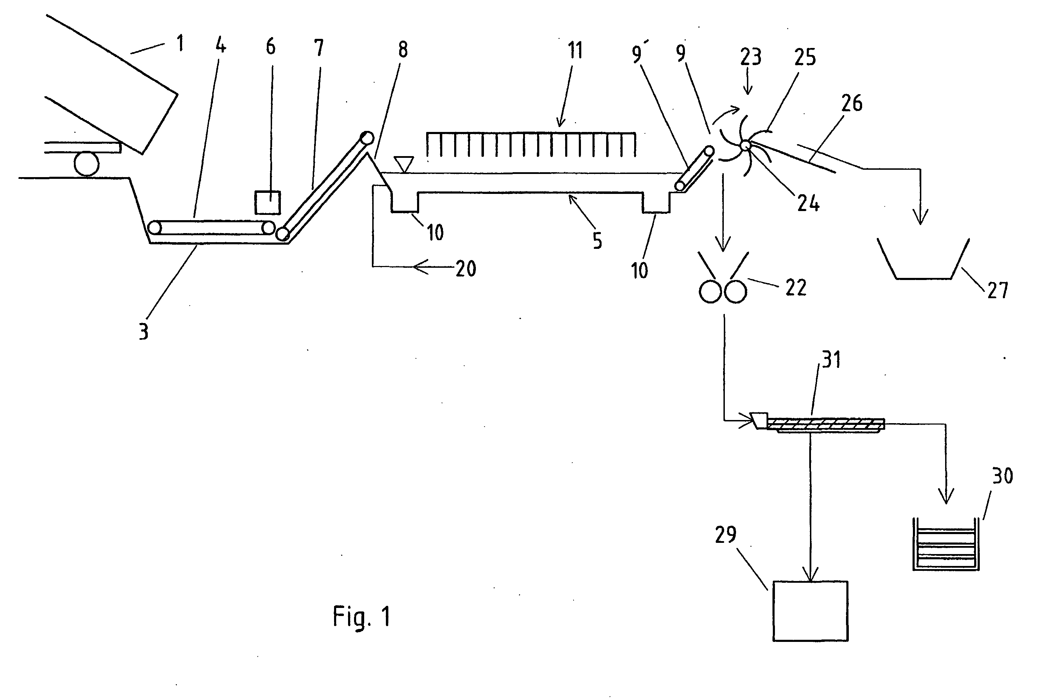

Fig. 1 zeigt eine Fördereinrichtung 4, welche den Biomüll aus der Auffangwanne 3 zur Weiterverarbeitung in die Wasserwanne 5 transportiert. Noch während des Transportes wird der im allgemeinen zusammengeklumpte Biomüll am Ende der Förderstrecke der Fördereinrichtung (4) mit Werkzeugen 6, hier ein rechts-links-gängiger Schneckentrieb, aufgelockert und flächig auf einem Schrägförderer (7) verteilt. Der Schrägförderer (7) transportiert den Biomüll in die Wasserwanne (5). Die flächige Verteilung des Biomülls vereinfacht das nachfolgende Aufschwemmen im Wasserbad.

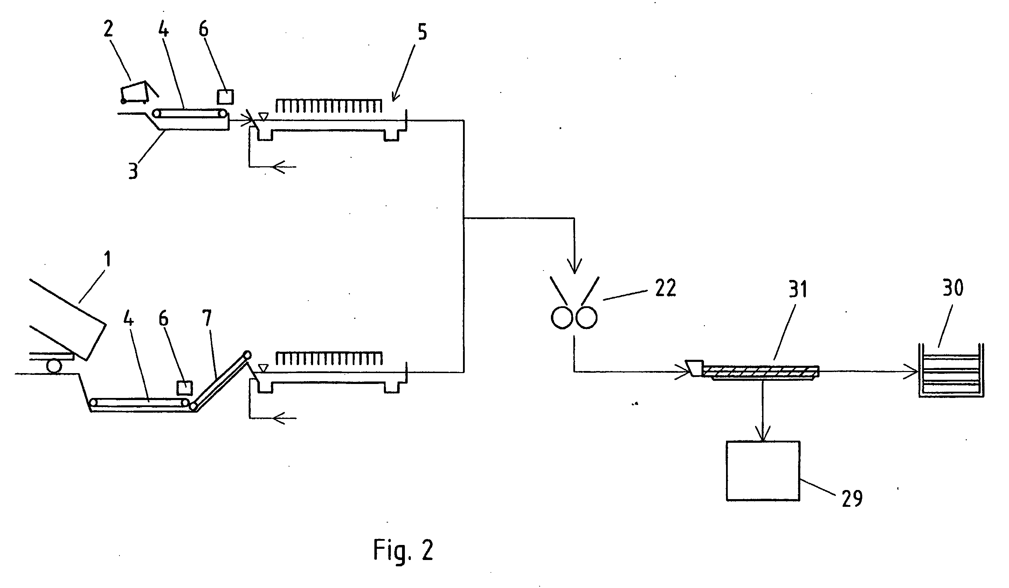

Fig.2 zeigt eine Ausführung der Vorrichtung, bei welcher die Speisung der Anlage sowohl über LKW 1 als auch durch kleinere Container 2 erfolgt. In der von Containern 2 befüllten Auffangwanne 3 befindet sich neben der Fördereinrichtung 4 nur noch eine Schnecke 6 zur Auflockerung und Verteilung des Biomülls. Auf einen Schrägförderer 7 kann hier verzichtet werden.

Die Wasserwanne 5 umfaßt einen Eintrittsbereich 8 für den Biomüll sowie einen Austrittsbereich 9 für den verbleibenden Restmüll, der von einem Schrägförderer 9' hinaustransportiert wird. Im Wasserbad wird der Biomüll aufgeschwemmt und weiter zerteilt. Verunreinigungen, insbesondere solche mit einem gegenüber Wasser spezifisch schwerem Gewicht sinken dabei zu Boden. Diese Verunreinigungen werden in zwei am Boden der Wasserwanne 5 vorgesehenen Sammel- und Austragsrinnen 10, 10' zum Sammeln und Abführen der abgeschiedenen Verunreinigungen erst gesammelt und dann ausgebracht.

Um den aufgeschwemmten Biomüll weiter zu zerteilen und die Laststoffe von den biogenen Anteilen zu trennen ist im wesentlichen über den gesamten Bereich der Wasserwanne 5 eine Zertrenneinrichtung 11 für den Biomüll angeordnet.

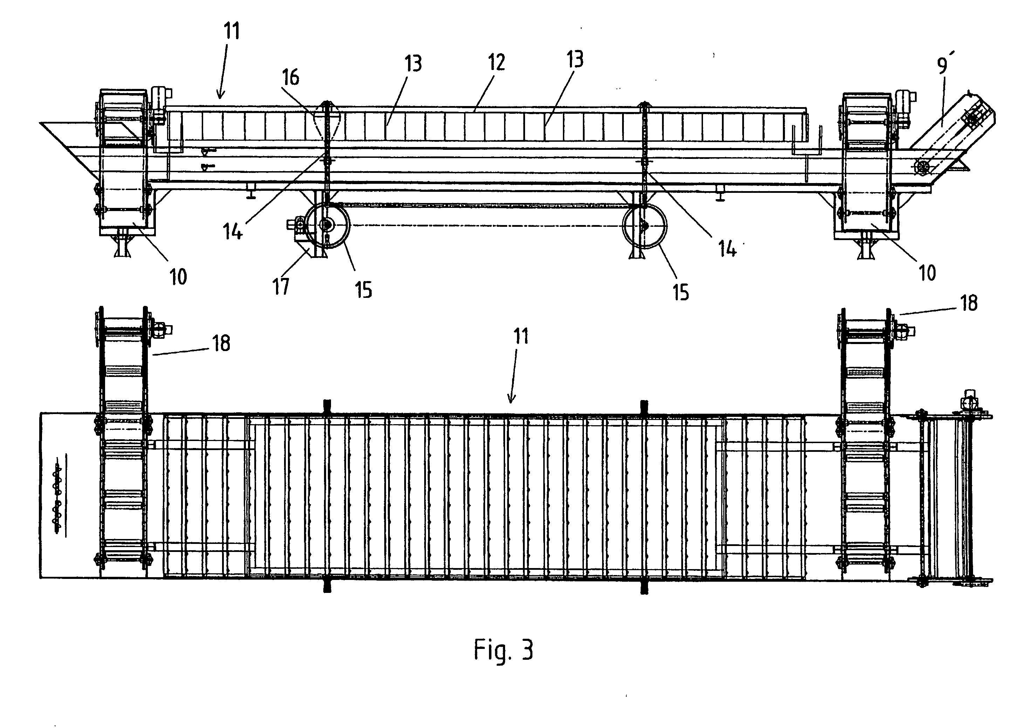

Diese in Fig.3 dargestellte Zertrenneinrichtung 11 umfaßt einen Balken 12, der in dichtem Raster gesetzte Trennwerkzeuge 13 trägt. Diese vorzugsweise als Gabeln, Rechen, Haspeln oder Krallen ausgebildeten Trennwerkzeuge 13 reißen den in die Wasserwanne 5 eingebrachten Biomüll immer wieder auf, und tauchen ihn periodisch unter Wasser, während sie ihn gleichzeitig auch weiter transportieren.

Um diese Bewegung ausführen zu können, ist der Balken 12 über zwei Anlenkteile 14, 14' mit im seitlichen Bodenbereich der Wasserwanne 5 angeordneten Exzenterscheiben 15, 15' verbunden.

Die aus dieser Konstruktion resultierende Bewegung der Mit dem Balken 12 verbundenen Trennwerkzeuge 13 ist in Fig. 3A unter der Bezeichnung 16, strichliert dargestellt. Der Antrieb der Zertrenneinrichtung 11 erfolgt über eine Steuereinrichtung 17, welche im Bereich der Exzenterscheibe 15 angeordnet ist.

Durch das Aufschwemmen im Wasserbad sowie das periodische Untertauchen über die gesamte Bearbeitungsstrecke lockert sich auch außergewöhnlich gefestigter Biomüll und gegenüber Wasser spezifisch schwerere Verunreinigungen sinken zu Boden. Der von den Trennwerkzeugen 13 permanent aufgerissene Biomüll wird ständig weiter transportiert, bis schlußendlich im Austrittsbereich 9 der Wasserwanne 5 nur noch Restmüll und gegenüber Wasser spezifisch leichtere Verunreinigungen wie pflanzliche Anteile oder Kunststoffe verbleiben.

Die absinkenden Verunreinigungen wie Steine, Metall, Glas, Ton, aber auch schwerere Kunststoffe werden in den Sammel- und Austragsrinnen 10, 10' gesammelt und von in den Rinnen angeordneten Vorrichtungen zum Ausbringen des angesammelten Materials abgeführt. Fig. 4A zeigt einen zu diesem Zweck in der Sammel- und Austragsrinne 10 bewegbar angeordneten Kratzer 18. Fig. 4B zeigt einen Schneckentrieb 19, der das Ausbringen der Verunreinigungen übernimmt.

In der im Eintrittsbereich 8 der Wasserwanne 5 vorgesehenen Sammel- und Austragsrinne 10 werden vorzugsweise die schweren Anteile der Verunreinigungen abgelagert, welche neben Steinen und losen Metallteilen durchaus auch Hämmer oder Batterieteile sein können. Weniger rasch sinkende Anteile werden später ausgeschieden und von der zweiten Sammel- und Austragsrinne 10' aufgenommen.

Bei der in Fig. 4A dargestellten Variante mit einem Kratzer 18 erfolgt die Ausbringung des Materials über einen Fördertrieb schräg nach oben in eine Tonne oder einen Container.

Dagegen transportiert die Schnecke 19 das Material in eine Wanne oder einen Sammelkasten.

Nach Abstellen der Anlage kann dieser entleert werden. Dazu wird der Kasten entweder entnommen oder auch nur der Boden ausgezogen.

Durch das Ausschwemmen des Biomülls nimmt das spezifische Gewicht des in der Wasserwanne eingebrachten Wassers ständig zu. Es müssen daher geeignete Maßnahmen gesetzt werden, um dem entgegen zu wirken und das spezifische Gewicht des Wassers auf einem konstanten Wert zu halten. Nur dann ist eine korrekte Durchführung des Verfahrens möglich.

Dazu wird das Wasser im Wasserbecken 5 ständig mit Nutzwasser verdünnt. Die Nutzwasserzuführung ist mit 20 dargestellt.

Bei einer zu hohen spezifischen Dichte des mit Schwebeteilen angereicherten Wassers kann der entsprechende Störstoffanteil nicht mehr oder nur mit Verzögerung absinken. Ein entsprechend vollständiges Ausbringen der Verunreinigungen wäre behindert.

Herkömmlicherweise ist die Wasserwanne 5 im Freien aufgestellt und wird ganzjährig betrieben. Daher muß sie beheizbar sein. Andernfalls könnten bei Betrieb unter niedrigeren Außentemperaturen die ausgeschiedenen Fette nicht mehr aufgelöst werden. Diese würden sich dann insbesondere im hinteren Teil des Beckens beim Absinken der Störstoffanteile an der Wassserwanne 5 ablagern und einen Ab- oder Weitertransport des Materials unmöglich machen.

Fig. 4A und 4B zeigen eine doppelwandige Ausbildung der Wasserwanne 5. Zwischen den beiden Mantelteilen sind Heizrohre 21 vorgesehen, durch welche ein Heizmedium gepumpt wird. Das Wasser kann so auf konstanter Temperatur gehalten werden.

Der aus dem aufgetrennten Biomüll verbleibende Restmüll verläßt zusammen mit den gegenüber Wasser spezifisch leichteren Bestandteilen der Verunreinigungen die Wasserwanne 5 im Austrittsbereich 9 über den Schrägförderer 9' und wird einem Mahlwerk 22 zugeführt. Soll das im Restmüll verbleibende Material wie Plastik etc. nicht in der Mühle 22 mit verarbeitet werden, so wird es, wie in Fig. 1 dargestellt, über eine Abscheidevorrichtung 23 aus dem Restmüll entfernt.

Die Abscheidevorrichtung 23 ist eine exzentrisch laufende Walze 24 mit einer Vielzahl in diese eingesetzter blattförmiger Elemente 25. Die Achse der Abscheidevorrichtung 23 ist unterhalb des Austrittsniveaus des Schrägförderers 9' angeordnet, um sämtliches aus der Wasserwanne 5 austretendes Material, insbesondere die gegenüber Wasser spezifisch leichteren Verunreinigungen aufnehmen zu können. Die Drehrichtung der Walze 24 erfolgt gegen den aus der Wasserwanne 5 austretenden Flüssigkeitsstrom.

Fig. 4C zeigt eine Draufsicht auf die Abscheidevorrichtung 23. Die blattförmigen Elemente 25 sind derart ausgebildet, daß entweder als Ganzes oder wenigstens in ihren Endbereichen elastisch sind. Sie bewegen sich durch den Flüssigkeitsstrom und nehmen zufolge ihrer bogenförmigen Ausbildung die Verunreinigungen auf. Diese transportieren sie zu einer Abstreif- oder Ablagefläche 26 im Austrittsbereich der Abscheidevorrichtung 23. Auf dieser Fläche werden die Verunreinigungen abgelegt und anschließend in einen Behälter 27 befördert, um endgültig entsorgt werden können.

Die Abstreif- oder Ablagefläche 26 ist eine schräg nach unten gestellte Fläche mit einer Vielzahl von schlitzförmigen Ausnehmungen 28, durch welche die elastischen blattförmigen Elemente 25 beim Abstreifen der Verunreinigungen durchschlüpfen können.

Wie in Fig. 4C gezeigt, stehen die blattförmigen Elemente 25 vor ihrem Eintritt in die Ausnehmungen 28 etwas über die Schlitztiefe der Ausnehmungen 28, um ein vollständiges Abstreifen der Verunreinigungen zu gewährleisten.

Der von den Verunreinigungen befreite Restmüll gelangt in das Mahlwerk 22.

Von dort wird das Mahlgut in eine Anlage 29 zur Kompostierung bzw. in einen Fermenter 30 weitergeleitet.

Bei der in Fig.2 dargestellten Ausführungsform werden die Plastikanteile im Mahlwerk 22 mit verarbeitet.

Nach dem Mahlvorgang gelangt das Material in eine Schneckenpresse 31, in der es ausgepreßt wird.

Sämtliches die Presse verlassendes Material, insbesondere alle langfasrigen Anteile wie Holz, Plastik etc. gehören zum kompostierbaren Anteil und werden in die Anlage 29 zur Kompostierung weiter geführt.

Alle durch das Sieb der Presse austretenden Materialien, bspw. Speisereste wie Salat etc. bilden den fermentierbaren Anteil und werden zu ihrer weiteren Verwendung einem Fermenter 30 zugeführt.

Fig. 5 zeigt eine wie zuvor beschriebene Vorrichtung sowie eine an diese angeschlossene Containerwaschanlage.

Diese transportiert die Container 2 mit der Öffnung nach unten aus dem Einfüllbereich in die Auffangwanne 3 über eine Förderstrecke 32 von der Anlage weg.

In einem Waschbereich 33 werden die Container 2 über Düsen 34 vollständig gewaschen, ehe sie die Förderstrecke 32 wieder verlassen und ihrer erneuten Verwendung zugeführt werden.

## Patentansprüche

1. Verfahren zur Weiterverarbeitung von verunreinigtem, in einem Sammelbereich vorliegenden Biomüll, mit folgenden Verfahrensschritten :
- Aufschwemmen des Biomülls in Wasser
- Absinkenlassen der spezifisch schweren Verunreinigungen
- Abführen der abgesunkenen Verunreinigungen,
**dadurch gekennzeichnet, daß** der Biomüll im Sammelbereich (3) vor seiner Entnahme aufgelockert und flächig verteilt wird, daß der aufgeschwemmte Biomüll nach folgenden, einander ergänzenden und kontinuierlichen Verfahrensschritten zerkleinert wird :
- mechanisches Aufreißen kompakter Anteile an Biomüll
- periodisches Untertauchen und
- Weitertransport des Biomülls
über eine zwischen Eintritts- und Austrittsbereich definierte Bearbeitungsstrecke im Wasser, wobei die gegenüber Wasser spezifisch schwereren Verunreinigungen absinken, und daß der verbleibende Restmüll aus dem Wasser entfernt, in einem Mahlwerk (22) zerkleinert und das Mahlgut in einen kompostierbaren und in einen fermentierbaren Anteil aufgetrennt wird.

2. Verfahren nach Anspruch 1, **dadurch gekennzeichnet, daß** der dem Sammelbereich (3) entnommenen Biomülls während der Entnahme aufgelockert und flächig verteilt wird.

3. Verfahren nach Anspruch 1, **dadurch gekennzeichnet, daß** das im Mahlwerk (22) zerkleinerte Mahlgut verpreßt und das Preßgut anschließend in einen kompostierbaren und in einen fermentierbaren Anteil aufgetrennt wird.

4. Verfahren nach Anspruch 2, **dadurch gekennzeichnet, daß** der verunreinigte Biomüll mechanisch zerteilt wird, vorzugsweise durch Rütteln, oder Rechen.

5. Verfahren nach Anspruch 1, **dadurch gekennzeichnet, daß** die spezifisch schwereren Verunreinigungen über die Bearbeitungsstrecke des Biomülls im Wasser in mehreren aufeinanderfolgenden Sammelbereichen gesammelt und aus diesen in zeitlich getrennten Phasen abgeführt werden.

6. Verfahren nach Anspruch 1, **dadurch gekennzeichnet, daß** das Wasser auf konstanter spezifischer Dichte gehalten wird.

7. Verfahren nach Anspruch 1, **dadurch gekennzeichnet, daß** die Wassertemperatur über der Schmelztemperatur von im Biomüll beinhalteten Fetten gehalten wird, zur Vermeidung der Ausfällung und Anlagerung der Fette.

8. Verfahren nach Anspruch 3, **dadurch gekennzeichnet, daß** die im Restmüll verbleibenden und gegenüber Wasser spezifisch leichteren Verunreinigungen über einen Flüssigkeitsstrom entweder aus dem Wasser geführt und entgegen der Stromrichtung entnommen, gesammelt und abgeführt werden und/oder mit dem Flüssigkeitsstrom einem Mahlwerk (22) zugeführt werden.

9. Vorrichtung zur Durchführung des Verfahrens nach den Ansprüchen 1 bis 8, mit einem zur Aufnahme des Biomülls vorgesehenen Sammelbereich, einer Wasserwanne zum Aufschwemmen des Biomülls, Abscheidevorrichtungen für aus dem Biomüll gelösten Verunreinigungen, **dadurch gekennzeichnet, daß** die Vorrichtung umfaßt :
- einen mit einer Auffangwanne (3) mit einer Verteileinrichtung (4,6) zum Transportieren, Auflockern und flächigem Aufbereiten des Biomülls ausgebildeten Sammelbereich,
- eine in der Wasserwanne (5) angeordnete Vorrichtung (11) zum Zertrennen sowie zum Periodischen Untertauchen und kontinuierlichen Transportieren des Biomülls.
- am Boden der Wasserwanne (5) über die Transportstrecke des Biomülls vorgesehene Sammel- und Austragsrinnen (10, 10') zum Sammeln uns Abführen der abgesunkenen Verunreinigungen.
- eine Abscheidevorrichtung (23) im Austrittsbereich (9) der Wasserwanne (5) für die aus der Wasserwanne (5) austretenden Verunreinigungen und
- Einrichtungen (29, 39 ) zum Kompostieren und Fermentieren des Biomülls,

10. Vorrichtung nach Anspruch 9, **dadurch gekennzeichnet, daß** die Verteileinrichtung (4,6) eine Fördereinrichtung (4) sowie Werkzeuge (6) zur Lockerung und Dosierung des verunreinigten Biomülls, insbesondere Rechen oder einen Schneckentrieb umfaßt.

11. Vorrichtung nach Anspruch 9, **dadurch gekennzeichnet, daß** für den Transport des Biomülls aus der Auffangwanne (3) in die Wasserwanne (5) ein im Anschluß an die Werkzeuge (6) angeordneter Schrägförderer (7) vorgesehen ist.

12. Vorrichtung nach Anspruch 9, **dadurch gekennzeichnet, daß** die Vorrichtung (11) zum Zertrennen sowie zum periodischen Untertauchen und kontinuierlichen Transportieren des Biomülls von einem Exzenterantrieb (14,14;15,15') bewegte Trennwerkzeuge (13) umfaßt.

13. Vorrichtung nach Anspruch 12, **dadurch gekennzeichnet, daß** die Trennwerkzeuge (13) Gabeln, Rechen, Haspeln oder Krallen sind.

14. Vorrichtung nach Anspruch 13, **dadurch gekennzeichnet, daß** die Trennwerkzeuge (13) in dichtem Raster gesetzt sind.

15. Vorrichtung nach Anspruch 9, **dadurch gekennzeichnet, daß** die Wasserwanne (5) mit einem Doppelmantel ausgebildet ist.

16. Vorrichtung nach Anspruch 15, **dadurch gekennzeichnet, daß** im Mantel der Wasserwanne (5), insbesondere in derem Bodenbereich, eine Heizung vorgesehen ist.

17. Vorrichtung nach Anspruch 16, **dadurch gekennzeichnet, daß** die Heizung im Doppelmantel geführte Heizrohre (21) sind.

18. Vorrichtung nach Anspruch 9, **dadurch gekennzeichnet, daß** die Abscheidevorrichtung (23) eine im Austrittsbereich (9) der Wasserwanne (5) angeordnete, exzentrisch laufende Walze (24) ist und daß die Walze (24) eine Vielzahl aufgesetzter, nach außen weisender blatt- oder stabförmiger Elemente (25) zur Aufnahme des Biomülls umfaßt.

19. Vorrichtung nach Anspruch 18, **dadurch gekennzeichnet, daß** die blatt- oder stabförmigen Elemente (25) in Rotationsrichtung der Walze (24) gebogen sind.

20. Vorrichtung nach Anspruch 18 oder 19, **dadurch gekennzeichnet, daß** die blatt-oder stabförmigen Elemente (25) mit federnden Enden ausgebildet sind.

21. Vorrichtung nach Anspruch 18, **dadurch gekennzeichnet, daß** die blatt-oder stabförmigen Elemente (25) aus Federstahl sind.

22. Vorrichtung nach einem der Ansprüche 17 bis 21, **dadurch gekennzeichnet, daß** die blatt oder stabfönnigen Elemente (25) in ihren Endbereichen verjüngt ausgebildet sind.

23. Vorrichtung nach einem der Ansprüche 17 bis 22, **dadurch gekennzeichnet, daß** die blatt- oder stabförmigen Elemente (25) Gabeln sind.

24. Vorrichtung nach Anspruch 18, **dadurch gekennzeichnet, daß** im Austragsbereich der Abscheidevorrichtung (23) eine Abstreif- und Ablagefläche (26) für das entnommene Material vorgesehen ist.

25. Vorrichtung nach Anspruch 24, **dadurch gekennzeichnet, daß** die Abstreif-und Ablagefläche (26) mit wenigstens einer Ausnehmung (28) zur Durchführung der blattoder stabförmigen Elemente (25) versehen ist.

26. Vorrichtung nach Anspruch 24, **dadurch gekennzeichnet, daß** die wenigstens eine Ausnehmung (28) schlitzförmig ist.

27. Vorrichtung nach den Ansprüchen 18 und 26, **dadurch gekennzeichnet, daß** jedes blatt- oder stabförmige Element (25) seine zugeordnete Ausnehmung (28) an Länge überragt.

28. Vorrichtung nach Anspruch 9, **dadurch gekennzeichnet, daß** in jeder Sammel-und Austragsrinne (10,10') eine Vorrichtung (18,19) zum Ausbringen des angesammelten Materials vorgesehen ist.

29. Vorrichtung nach Anspruch 28, **dadurch gekennzeichnet, daß** die Vorrichtung zum Ausbringen des angesammelten Materials ein in den Sammel- und Austragsrinnen (10,10') bewegbarer Kratzer (18) ist.

30. Vorrichtung nach Anspruch 29, **dadurch gekennzeichnet, daß** die Vorrichtung zum Ausbringen des angesammelten Materials ein Schneckentrieb (19) ist.

## Claims

1. A procedure for the further processing of polluted organic waste present in a collection area, comprising the following procedural steps:
- Suspending the organic waste in water
- Letting the specifically heavy impurities sink down
- Removing the sunken impurities,
**characterised in that** the organic waste, prior to being extracted, is loosened up and spread areally in the collection area (3), **in that** the suspended organic waste is broken up according to the following continuous procedural steps which complement one another:
- Mechanically tearing up solid parts of organic waste
- Periodic submerging
- Further transportation of the organic waste
along a processing section in water, defined between entry and exit areas, whereby the specifically heavier-than-water impurities sink down, and **in that** the remaining residual waste is extracted from the water, broken up in a mill (22) and the milled waste is separated into a compostable and a fermentable portion.

2. The procedure according to claim 1, **characterised in that** the organic waste extracted from the collection area (3) is loosened up and spread areally during its extraction.

3. The procedure according to claim 1, **characterised in that** the milled material broken up in a mill (22) is compacted and the compacted material is then separated into a compostable and a fermentable portion.

4. The procedure according to claim 2, **characterised in that** the polluted organic waste is broken up mechanically, preferably by shaking or raking.

5. The procedure according to claim 1, **characterised in that** the specifically heavier impurities are collected along the processing section of the organic waste in the water in several successive collection areas and are removed from these in timed separate phases.

6. The procedure according to claim 1, **characterised in that** the water is kept at a constant specific density.

7. The procedure according to claim 1, **characterised in that** the water temperature is kept above the melting temperature of the fatty matters contained in the organic waste, in order to avoid precipitation and accumulation of the fatty matters.

8. The procedure according to claim 3, **characterised in that** the specifically lighter-than-water impurities remaining in the residual waste are either guided out of the water by means of a liquid current and extracted, collected and removed against the current direction and/or fed to a mill (22) together with the liquid current.

9. An apparatus for carrying out the procedure according to claims 1 to 8 with a collection area provided for receiving the organic waste, a water trough for suspending the organic waste, separating devices for impurities dissolved from the organic waste, **characterised in that** the apparatus comprises:
- a collection area comprising a catchment trough (3) having a spreading facility (4, 6) for transporting, loosening and areally preparing the organic waste,
- a device (11) arranged in the water trough (5) for tearing up and periodically submerging and continuously transporting the organic waste,
- collecting and discharging channels (10, 10') provided at the bottom of the water trough (5) along the transporting section of the organic waste for collecting and removing the sunken impurities,
- a separating device (23) in the exit area (9) of the water trough (5) for the impurities leaving the water trough (5), and
- facilities (29, 39) for composting and fermenting the organic waste.

10. The apparatus according to claim 9, **characterised in that** the spreading facility (4, 6) comprises a conveying facility (4) as well as tools (6) for loosening and metering the polluted organic waste, in particular rakes or a worm drive.

11. The apparatus according to claim 9, **characterised in that** a slope conveyor (7) arranged downstream of the tools (6) is provided for transporting the organic waste from the catchment trough (3) into the water trough (5).

12. The apparatus according to claim 9, **characterised in that** the device (11) for tearing up and periodically submerging and continually transporting the organic waste comprises separating tools (13) driven by an eccentric drive (14, 14; 15, 15').

13. The apparatus according to claim 12, **characterised in that** the separating tools (13) are forks, rakes, reels or claws.

14. The apparatus according to claim 13, **characterised in that** the separating tools (13) are arranged in a closed pitch (grid).

15. The apparatus according to claim 9, **characterised in that** the water trough (5) is fitted with a double shell.

16. The apparatus according to claim 15, **characterised in that** the heater is provided within the wall of the water trough (5), in particular in its bottom area.

17. The apparatus according to claim 16, **characterised in that** the heater consists of heating pipes (21) lead within the double wall.

18. The apparatus according to claim 9, **characterised in that** the separating device (23) comprises an eccentrically running roll (24) arranged in the exit area (9) of the water trough (5), and **in that** the roll (24) has a plurality of surface-mounted, outward-pointing blade- or rod-shaped elements (25) for receiving the organic waste.

19. The apparatus according to claim 18, **characterised in that** the blade- or rod-shaped elements (25) are bent in rotational direction of the roll (24).

20. The apparatus according to claim 18 or 19, **characterised in that** the blade- or rod-shaped elements (25) are provided with springy ends.

21. The apparatus according to claim 18, **characterised in that** the blade- or rod-shaped elements (25) are made of spring steel.

22. The apparatus according to one of claims 17 to 21, **characterised in that** the blade- or rod-shaped elements (25) are tapered in their end areas.

23. The apparatus according to one of claims 17 to 22, **characterised in that** blade- or rod-shaped elements (25) are forks.

24. The apparatus according to claim 18, **characterised in that** a scraping and depositing surface (26) for the extracted material is provided in the discharge area of the separating device (23).

25. The apparatus according to claim 24, **characterised in that** the scraping and depositing surface (26) is provided with at least one recess (28) for the blade-or rod-shaped elements (25) to pass through.

26. The apparatus according to claim 24, **characterised in that** at the least one recess (28) is slot-shaped.

27. The apparatus according to claims 18 and 26, **characterised in that** each blade- or rod-shaped element (25) rises above its related recess (28) with respect to its length.

28. The apparatus according to claim 9, **characterised in that** a device (18, 19) is provided in each collection and discharge channel (10, 10') for discharging the accumulated material.

29. The apparatus according to claim 28, **characterised in that** the device for discharging the accumulated material is a scraper (18) movable in the collection and discharge channels (10, 10').

30. The apparatus according to claim 29, **characterised in that** the device for discharging the accumulated material is a worm drive (19).

## Revendications

1. Procédé de transformation de déchets biologiques souillés présents dans une zone de collecte, comportant les étapes opératoires suivantes :
- rinçage des déchets biologiques dans de l'eau,
- temps de déposition des impuretés spécifiquement lourdes,
- évacuation des impuretés déposées,
**caractérisé en ce que** les déchets biologiques sont ameublis dans la zone de collecte (3) avant leur enlèvement et répartis à plat, que les déchets biologiques rincés sont broyés après les étapes opératoires suivantes, se complétant mutuellement et continues :
- déchiquetage mécanique des fragments compacts de déchets biologiques,
- trempage périodique et
- transport des déchets biologiques plus loin,
en passant par une zone de traitement dans de l'eau définie entre la zone d'entrée et la zone de sortie, les impuretés spécifiquement plus lourdes que l'eau se déposant, et que les déchets résiduels sont retirés de l'eau, broyés dans une broyeuse (22) et que le produit broyé est séparé en une partie compostable et une partie fermentable.

2. Procédé selon la revendication 1, **caractérisé en ce que** les déchets biologiques enlevés de la zone de collecte (3) sont ameublis pendant leur enlèvement et répartis à plat.

3. Procédé selon la revendication 1, **caractérisé en ce que** le produit broyé dans la broyeuse (22) est compressé et que le produit compressé est ensuite séparé en une partie compostable et une partie fermentable.

4. Procédé selon la revendication 2, **caractérisé en ce que** les déchets biologiques souillés sont séparés mécaniquement, de préférence par secousses ou ratissage.

5. Procédé selon la revendication 1, **caractérisé en ce que** les impuretés spécifiquement plus lourdes sont collectées sur la piste de traitement des déchets biologiques dans de l'eau dans plusieurs zones de collecte successives et en sont évacuées lors de phases séparées dans le temps.

6. Procédé selon la revendication 1, **caractérisé en ce que** l'eau est maintenue à une densité spécifique constante.

7. Procédé selon la revendication 1, **caractérisé en ce que** la température de l'eau est maintenue au dessus de la température de fusion des graisses contenues dans les déchets biologiques, afin d'éviter la précipitation et le dépôt des graisses.

8. Procédé selon la revendication 3, **caractérisé en ce que** les impuretés restant dans le déchet résiduel et spécifiquement plus légères que l'eau sont enlevées soit au moyen d'un flux de liquide, soit sont guidées hors de l'eau et enlevées à l'encontre du sens du flux, collectées et évacuées et/ou acheminées avec le flux de liquide à une broyeuse (22).

9. Procédé de réalisation du procédé selon les revendications 1 à 8, comportant une zone de collecte destinée à recevoir les déchets biologiques, un bassin d'eau pour rincer les déchets biologiques, des dispositifs séparateurs pour les impuretés retirées des déchets biologiques, **caractérisé en ce que** le dispositif comprend :
- une zone de collecte conçue avec un bassin récepteur (3) avec un dispositif distributeur (4, 6) pour le transport, l'ameublissement et l'étalement des déchets biologiques,
- un dispositif (11) disposé dans le bassin d'eau (5) et servant à séparer ainsi qu'à tremper périodiquement et à transporter en continu les déchets biologiques,
- des rigoles de collecte et de vidage (10, 10') prévues au fond du bassin collecteur (5) sur la piste de transport des déchets biologiques pour collecter et évacuer les impuretés déposées,
- un dispositif séparateur (23) dans la zone de sortie (9) du bassin d'eau (5) pour les impuretés sortant du bassin d'eau (5) et
- des dispositifs (29, 39) de compostage et de fermentation des déchets biologiques.

10. Dispositif selon la revendication 9, **caractérisé en ce que** le dispositif distributeur (4, 6) comporte un dispositif de convoyage (4) ainsi que des outils (6) d'ameublissement et de dosage des déchets biologiques souillés, notamment des râteaux ou un engrenage à vis sans fin.

11. Dispositif selon la revendication 9, **caractérisé en ce qu'**il est prévu, pour le transport des déchets biologiques du bassin récepteur (3) vers le bassin d'eau (5), un convoyeur oblique (7) disposé adjacent aux outils (6).

12. Dispositif selon la revendication 9, **caractérisé en ce que** le dispositif (11) de séparation ainsi que de trempage périodique et de transport continu des déchets biologiques comprend des outils séparateurs (13) mus par une propulsion excentrique (14, 14' ; 15, 15').

13. Dispositif selon la revendication 12, **caractérisé en ce que** les outils séparateurs (13) sont des fourches, des râteaux, des tourniquets ou des griffes.

14. Dispositif selon la revendication 13, **caractérisé en ce que** les outils séparateurs (13) sont posés en trame serrée.

15. Dispositif selon la revendication 9, **caractérisé en ce que** le bassin d'eau (5) est conçu avec une double chemise.

16. Dispositif selon la revendication 15, **caractérisé en ce qu'**il est prévu un chauffage dans la chemise du bassin d'eau (5), notamment dans sa zone de fond.

17. Dispositif selon la revendication 16, **caractérisé en ce que** le chauffage consiste en tuyaux chauffants (21) guidés dans la double chemise.

18. Dispositif selon la revendication 9, **caractérisé en ce que** le dispositif séparateur (23) est un cylindre (24) fonctionnant de manière excentrique disposé dans la zone de sortie (9) du bassin d'eau (5) et que le cylindre (24) comprend une multitude d'éléments (25) posés dessus, tournés vers l'extérieur et en forme de lames ou de baguettes pour recevoir les déchets biologiques.

19. Dispositif selon la revendication 18, **caractérisé en ce que** les éléments en forme de lames ou de baguettes (25) sont courbés dans le sens de rotation du cylindre (24).

20. Dispositif selon la revendication 18 ou 19,
**caractérisé en ce que** les éléments en forme de lames ou de baguettes (25) sont conformés avec des extrémités résilientes.

21. Dispositif selon la revendication 18, **caractérisé en ce que** les éléments en forme de lames ou de baguettes (25) sont en acier à ressort.

22. Dispositif selon l'une quelconque des revendications 17 à 21, **caractérisé en ce que** les éléments en forme de lames ou de baguettes (25) sont conformés rétrécis dans leurs zones terminales.

23. Dispositif selon l'une quelconque des revendications 17 à 22, **caractérisé en ce que** les éléments en forme de lames ou de baguettes (25) sont des fourches.

24. Dispositif selon la revendication 18, **caractérisé en ce qu'**il est prévu dans la zone de vidage du dispositif séparateur (23) une surface de déversement et de dépôt (26) pour la matière enlevée.

25. Dispositif selon la revendication 24, **caractérisé en ce que** la surface de déversement et de dépôt (26) est pourvue d'au moins un évidement (28) pour le passage des éléments en formes de lames ou de baguettes (25).

26. Dispositif selon la revendication 24, **caractérisé en ce que** l'au moins un évidement (28) est en forme de fente.

27. Dispositif selon les revendications 18 et 26, **caractérisé en ce que** chaque élément en forme de lame ou de baguette (25) dépasse en longueur de l'évidement (28) qui lui est associé.

28. Dispositif selon la revendication 9, **caractérisé en ce qu'**il est prévu dans chaque rigole de collecte et de vidage (10, 10') un dispositif (18, 19) d'extraction de la matière collectée.

29. Dispositif selon la revendication 28, **caractérisé en ce que** le dispositif d'extraction de la matière collectée est un grattoir (18) déplaçable dans les rigoles de collecte et de vidage (10, 10').

30. Dispositif selon la revendication 29, **caractérisé en ce que** le dispositif d'extraction de la matière collectée est un engrenage à vis sans fin (19).
